# DEMANDE DE BREVET EUROPEEN

(11) **EP 4 811 011 A2**
(43) Date de publication de la demande: **23.09.2026**
(21) Numéro de dépôt: 26196830.9
(22) Date de dépôt: 18.12.2023
(51) Int. Cl.: G02B 6/42

(54) **DISPOSITIF DE COUPLAGE OPTIQUE À STRUCTURE DE DIFFRACTION HOLOGRAPHIQUE**

(30) Priorité: 20.12.2022 FR 2213928
(62) Numéro(s) de document de la (des) demande(s) initiale(s) en application de l'article 76 CBE: 23217639.6 / 4 390 483
(71) Demandeur: Commissariat à l'Energie Atomique et aux Energies Alternatives, 75015 Paris (FR)
(72) Inventeur: MARTINEZ, Christophe, 38054 GRENOBLE CEDEX 09 (FR); FOWLER, Daivid, 38054 GRENOBLE CEDEX 09 (FR); WILMART, Quentin, 38054 GRENOBLE CEDEX 09 (FR); LAPLATINE, Loïc, 38054 GRENOBLE CEDEX 09 (FR)
(74) Mandataire: Santarelli

(57) **Abrégé**

Dispositif de couplage optique (100) configuré pour coupler optiquement un premier dispositif de guidage optique (102) à un deuxième dispositif de guidage optique (104), comprenant au moins une première entrée-sortie optique par laquelle le premier dispositif de guidage optique est destiné à émettre et/ou recevoir un premier faisceau lumineux (103), et une deuxième entrée-sortie optique par laquelle le deuxième dispositif de guidage optique est destiné à recevoir et/ou émettre le premier faisceau lumineux, comportant en outre au moins une structure de diffraction holographique (108) configurée pour guider et adapter le premier faisceau lumineux entre les première et deuxième entrées-sorties optiques du dispositif de couplage optique.

## Description

### DOMAINE TECHNIQUE

L'invention concerne le domaine de la photonique, en particulier la photonique intégrée, et s'applique avantageusement pour réaliser un couplage optique entre des circuits photoniques provenant de technologies différentes, par exemple entre un premier circuit photonique à base de nitrure de silicium et un deuxième circuit photonique à base de matériaux III-V. L'invention peut servir lors de l'assemblage de puces photoniques sur wafer ou de puces photoniques entre elles, pour réaliser un couplage optique entre ces éléments. A titre d'exemple, l'invention peut s'appliquer pour au moins l'une des applications suivantes : Lidar, photonique quantique, capteurs, photonique neuromorphique.

### État de la technique antérieure

Le couplage optique entre deux circuits photoniques (appelés « Photonic Integrated Circuit » en anglais, ou PIC) est nécessaire lorsque les deux PIC ne peuvent pas être fabriqués conjointement sur le même wafer, ou lorsqu'une intégration des deux PIC sur un même wafer est trop complexe. C'est par exemple le cas entre un PIC composé de matériaux III-V (avec par exemple un substrat et un guide optique à base d'InP ou d'AsGa) et un PIC composé de silicium (avec par exemple un substrat de silicium et un guide optique en silicium ou en SiN). Un tel couplage optique peut par exemple intervenir lors d'une réalisation de systèmes optiques intégrés avec des composants actifs tels que des lasers, des amplificateurs ou des photodétecteurs. Ce couplage optique peut être de type puce à puce, wafer à wafer ou puce à wafer.

Un tel couplage optique est aussi nécessaire pour relier un PIC à une fibre optique dont les modes ont des dimensions différentes. A titre d'exemple, le diamètre du mode d'un guide d'onde monomode en silicium à λ = 1550 nm est d'environ 0,5 µm alors que celui d'une fibre monomode en verre à λ = 1550 nm est d'environ 10 µm. Un élément de couplage optique réalisant une adaptation optique entre le guide d'onde et la fibre est dans ce cas nécessaire. Il est également courant que les modes optiques des guides issus de deux PIC diffèrent de par leur taille, leur géométrie et leur indice effectif. Afin que la lumière passe d'un PIC à l'autre en minimisant les pertes de couplage, il est nécessaire d'adapter, ou modifier, au moins l'un des deux modes. Cela peut se faire via :
- des éléments coniques (« tapers » en anglais) et/ou d'épaisseur variable permettant de réduire ou d'élargir les modes des faisceaux lumineux transmis ;
- des guides intermédiaires, par exemple en silicium et permettant le passage d'un guide à base d'InP vers une guide à base de SiN ;
- des lentilles, comme par exemple une lentille convergente disposée en bout de fibre pour réduire le diamètre du mode de la fibre et le rapprocher de celui du guide d'onde auquel la fibre est couplée ;
- des guides structurés de type SWG (« Sub-Wavelength Grating » en anglais) permettant de dé-confiner, ou agrandir, le mode du guide et le rapprocher de celui d'une fibre à laquelle le guide est couplé ;
- des réseaux de couplage (« Grating Coupler » en anglais, ou GC) qui, via un « taper » et un changement de direction, permettent d'adapter la taille du mode via le design du GC ;
- « Photonic Wire Bonding » en anglais, ou PWB, consistant à créer, par nano-impression 3D de polymère, une fibre réalisant cette adaptation ;
- un dispositif de type MOB (« Micro-Optical Bench » en anglais) permettant, via un jeu de lentille, prisme, miroir et GC, de coupler un laser dans un guide d'onde.

En outre, le couplage optique peut se faire :
- en « butt-coupling », ou « edge-coupling », c'est-à-dire parallèlement à l'axe de propagation de la lumière, comme c'est le cas par exemple pour une lentille disposée en bout de fibre ou pour un guide SWG ;
- de type adiabatique, ou évanescent, verticalement (avec changement du plan dans lequel la lumière se propage) ou latéralement (les directions de propagation avant et après le couplage se trouvant dans un même plan), comme c'est par exemple le cas pour un « taper ».

Quel que soit le type de couplage optique réalisé, des contraintes d'alignement importantes doivent être respectées. Par exemple, dans le cas d'assemblage de puces lasers (par exemple de type VCSEL ou barrette laser) sur un wafer photonique de silicium, l'alignement doit se faire avec une précision inférieure à la taille du mode optique, soit de l'ordre de ± 0,2 à ± 2 µm suivant le type de guide et la longueur d'onde. Garantir une telle précision d'alignement inférieure à 20 µm requière de réaliser un alignement actif nécessitant une mesure de la transmission optique, ce qui est onéreux. De plus, le temps nécessaire à chaque alignement et collage est long (de l'ordre de quelques secondes). Enfin, les pertes dues à la différence de taille de mode et au désalignement sont typiquement de l'ordre de plusieurs dB.

### EXPOSÉ DE L'INVENTION

Un but de la présente invention est de proposer une solution de couplage optique ne présentant pas les contraintes d'alignement des solutions de couplage optique de l'art antérieur, et limitant également les pertes optiques liées au couplage optique.

Pour cela, la présente invention propose un dispositif de couplage optique configuré pour coupler optiquement un premier dispositif de guidage optique à un deuxième dispositif de guidage optique, comprenant au moins une première entrée-sortie optique par laquelle le premier dispositif de guidage optique est destiné à émettre et/ou recevoir un premier faisceau lumineux, et une deuxième entrée-sortie optique par laquelle le deuxième dispositif de guidage optique est destiné à recevoir et/ou émettre le premier faisceau lumineux, caractérisé en ce qu'il comporte en outre au moins une structure de diffraction holographique configurée pour guider et adapter le premier faisceau lumineux entre les première et deuxième entrées-sorties optiques du dispositif de couplage optique.

Le dispositif de couplage optique proposé permet, grâce à la structure de diffraction holographique assurant le guidage optique et l'adaptation du faisceau lumineux transmis entre les première et deuxième entrées-sorties optiques, d'améliorer le compromis entre la précision d'alignement requise entre les premier et deuxième dispositifs de guidage optique (qui est moindre que celle requise avec les solutions de l'art antérieur), le coût du couplage optique réalisé entre ces dispositifs de guidage optique, l'efficacité du couplage optique et sa complexité.

La structure de diffraction holographique utilisée dans le dispositif de couplage optique permet de coupler des modes de taille très différentes, avec des orientations presque quelconques et issus de dispositifs de guidage optique non positionnés précisément et pouvant être éloignés l'un de l'autre d'une distance de plusieurs centaines de microns, voire de plusieurs millimètres.

La structure de diffraction holographique permet par exemple de compenser des différences entre les modes optiques des deux dispositifs de guidage optique sans utiliser d'élément optique intermédiaire.

Lorsque le premier dispositif de guidage optique est destiné à émettre le premier faisceau lumineux, le deuxième dispositif de guidage optique est destiné à recevoir le premier faisceau lumineux via le dispositif de couplage optique. Lorsque le deuxième dispositif de guidage optique est destiné à émettre le premier faisceau lumineux, le premier dispositif de guidage optique est destiné à recevoir le premier faisceau lumineux via le dispositif de couplage optique.

Le dispositif de guidage optique réalisant l'émission du premier faisceau lumineux peut comporter un élément émissif laser, par exemple une diode laser, configuré pour émettre le premier faisceau lumineux vers la structure de diffraction holographique.

Le dispositif de couplage optique proposé peut être avantageusement utilisé pour coupler optiquement un circuit photonique, réalisé sous forme de puce active, avec un dispositif de guidage optique passif (par exemple un guide optique à base de silicium ou de SiN).

Dans un premier mode de réalisation, le dispositif de couplage optique peut être tel que :
- le premier dispositif de guidage optique soit destiné à émettre et/ou recevoir le premier faisceau lumineux au niveau de la première entrée-sortie optique du dispositif de couplage optique selon une première direction ;
- le deuxième dispositif de guidage optique soit destiné à recevoir et/ou émettre le premier faisceau lumineux au niveau de la deuxième entrée-sortie optique du dispositif de couplage optique selon une deuxième direction qui n'est pas parallèle à la première direction et qui croise la première direction dans la structure de diffraction holographique ;
- la structure de diffraction holographique soit représentative d'interférences destinées à se produire entre le premier faisceau lumineux, lorsque celui-ci est destiné à être émis dans la première entrée-sortie optique du dispositif de couplage optique selon la première direction, et un deuxième faisceau lumineux destiné à être focalisé sur la deuxième entrée-sortie optique du dispositif de couplage optique parallèlement à la deuxième direction et qui croise le premier faisceau lumineux dans une région de la structure de diffraction holographique.

Dans des deuxième et troisième modes de réalisation, le dispositif de couplage optique peut être tel que :
- le premier dispositif de guidage optique soit destiné à émettre et/ou recevoir le premier faisceau lumineux au niveau de la première entrée-sortie optique du dispositif de couplage optique selon une première direction ;
- le deuxième dispositif de guidage optique est destiné à recevoir et/ou émettre le premier faisceau lumineux au niveau de la deuxième entrée-sortie optique du dispositif de couplage optique selon une deuxième direction ;
et la structure de diffraction holographique peut comporter au moins :
- une première région représentative de premières interférences destinées à se produire entre le premier faisceau lumineux, lorsque celui-ci est destiné à être émis dans la première entrée-sortie optique du dispositif de couplage optique selon la première direction, et un deuxième faisceau lumineux destiné à être émis selon une troisième direction qui n'est pas parallèle à la première direction et qui croise le premier faisceau lumineux dans la première région de la structure de diffraction holographique ;
- une deuxième région, distincte de la première région et représentative de deuxièmes interférences destinées à se produire entre un troisième faisceau lumineux destiné à être émis dans la deuxième entrée-sortie optique du dispositif de couplage optique parallèlement à la deuxième direction et un quatrième faisceau lumineux, correspondant à un faisceau lumineux conjugué (suivant les lois de l'optique) du deuxième faisceau lumineux, destiné à être émis selon une quatrième direction opposée à la troisième direction et qui croise le troisième faisceau lumineux dans la deuxième région de la structure de diffraction holographique, les deuxième et quatrième faisceaux lumineux étant conjugués suivant les lois de l'optique.

Par rapport au premier mode de réalisation, la structure de diffraction holographique est ici formée de première et deuxième régions distinctes, ce qui permet de réaliser un guidage plus complexe du premier faisceau lumineux, notamment lorsque les première et deuxième directions ne se trouvent pas dans un même plan.

Dans le deuxième mode de réalisation, la structure de diffraction holographique peut être formée dans une seule portion de matériau.

Dans le troisième mode de réalisation, la première région de la structure de diffraction holographique peut être formée dans une première portion de matériau, et la deuxième région de la structure de diffraction holographique peut être formée dans une deuxième portion de matériau distincte de la première portion de matériau. Le fait d'avoir une structure de diffraction holographique comprenant des régions distinctes formées dans des portions de matériau distinctes permet d'appliquer une approche modulaire pour la réalisation du dispositif de couplage optique, c'est-à-dire réaliser différentes parties du dispositif de couplage optique indépendamment les unes des autres avant de les assembler pour obtenir le dispositif de couplage optique.

La ou les portions de matériau incluant la structure de diffraction holographique peuvent comporter au moins un photopolymère ou de l'halogénure d'argent. L'utilisation de photopolymère pour la réalisation de la structure de diffraction holographique est particulièrement avantageuse car lors de la réalisation du dispositif de couplage optique, il est possible d'enregistrer aisément les interférences se produisant au sein du photopolymère et qui sont représentative du guidage et de l'adaptation optique à réaliser par la structure de diffraction holographique.

Lorsque la ou les portions de matériau incluant la structure de diffraction holographique comportent au moins un photopolymère, le dispositif de couplage optique peut comporter en outre au moins une couche de matériau étanche à l'oxygène recouvrant la ou les portions de matériau incluant la structure de diffraction holographique.

L'invention porte également sur un système optique comprenant au moins :
- un dispositif de couplage optique tel que décrit ci-dessus ;
- un premier dispositif de guidage optique destiné à émettre et/ou recevoir un premier faisceau lumineux et couplé optiquement à la première entrée-sortie optique du dispositif de couplage optique ;
- un deuxième dispositif de guidage optique destiné à recevoir et/ou émettre le premier faisceau lumineux et couplé optiquement à la deuxième entrée-sortie du dispositif de couplage optique.

De manière avantageuse, le système optique peut être tel que :
- le premier dispositif de guidage optique comprenne deux premières entrées-sorties de guidage distinctes et couplées optiquement à la première entrée-sortie optique du dispositif de couplage optique ;
- le deuxième dispositif de guidage optique comprenne deux deuxièmes entrées-sorties de guidage distinctes et couplées optiquement à la deuxième entrée-sortie optique du dispositif de couplage optique.

Ainsi, chacun des premier et deuxième dispositifs de guidage optique peut comporter deux guides optiques distincts, l'un servant à la réalisation de la structure de diffraction holographique et l'autre servant lors de l'utilisation du système optique après sa réalisation.

Lorsque le dispositif de couplage optique comporte les caractéristiques du premier mode de réalisation précédemment décrit, le système optique peut être tel que :
- les premier et deuxième dispositifs de guidage optique correspondent à deux circuits photoniques, ou à un circuit photonique et au moins une fibre optique ;
- le dispositif de couplage optique et les premier et deuxième dispositifs de guidage optique sont disposés sur un même substrat.

Lorsque le dispositif de couplage optique comporte les caractéristiques du deuxième mode de réalisation précédemment décrit, le système optique peut être tel que :
- le premier dispositif de guidage optique correspond à un circuit photonique ;
- le deuxième dispositif de guidage optique comporte un guide optique inclus dans un substrat ;
- le dispositif de couplage optique et le circuit photonique soient disposés sur le substrat.

Au moins l'un des premier et deuxième dispositifs de guidage optique peut comporter un élément d'émission lumineuse.

L'invention porte également sur un procédé de réalisation d'un dispositif de couplage optique configuré pour coupler optiquement un premier dispositif de guidage optique à un deuxième dispositif de guidage optique, comprenant au moins une réalisation d'une structure de diffraction holographique configurée pour guider et adapter un premier faisceau lumineux entre des première et deuxième entrées-sorties optiques du dispositif de couplage optique, le premier faisceau lumineux étant destiné à être émis et/ou reçu par le premier dispositif de guidage optique par la première entrée-sortie optique, et étant destiné à être reçu et/ou émis par le deuxième dispositif de guidage optique par la deuxième entrée-sortie optique.

L'invention porte également sur un procédé de réalisation d'un système optique, comprenant au moins :
- réalisation d'un premier dispositif de guidage optique destiné à émettre et/ou recevoir un premier faisceau lumineux, et d'un deuxième dispositif de guidage optique destiné à recevoir et/ou émettre le premier faisceau lumineux ;
- réalisation d'un dispositif de couplage optique par la mise en œuvre du procédé décrit ci-dessus.

Dans un premier mode de réalisation, les premier et deuxième dispositifs de guidage optique peuvent être réalisés sur un substrat tels que :
- le premier dispositif de guidage optique soit destiné à émettre et/ou recevoir le premier faisceau lumineux selon une première direction, et que
- le deuxième dispositif de guidage optique soit destiné à recevoir et/ou émettre le premier faisceau lumineux selon une deuxième direction qui n'est pas parallèle à la première direction et qui soit destinée à croiser la première direction dans une région de la structure de diffraction holographique du dispositif de couplage optique,
et la structure de diffraction holographique peut être réalisée par la mise en œuvre des étapes suivantes :
- dépôt d'une couche de matériau holographique sur au moins une région du substrat au niveau de laquelle la structure de diffraction holographique est destinée à être réalisée ;
- émission d'un premier faisceau lumineux d'écriture par le premier dispositif de guidage optique selon la première direction, et d'un deuxième faisceau lumineux d'écriture parallèle à la deuxième direction, focalisé sur le deuxième dispositif de guidage optique et croisant le premier faisceau lumineux d'écriture dans une partie de la couche de matériau holographique destinée à former ladite région de la structure de diffraction holographique, formant la structure de diffraction holographique qui est représentative des interférences produites entre les premier et deuxième faisceaux lumineux d'écriture, les premier et deuxième faisceaux lumineux d'écriture étant issus d'une même source optique.

La source optique dont sont issus les premier et deuxième faisceaux lumineux d'écriture est choisie telle qu'elle suffisamment cohérente pour développer une figure d'interférence dans le volume de matériau holographique nécessaire à l'enregistrement de la structure de diffraction holographique.

Dans tout le document, un matériau holographique désigne un matériau photosensible dont les caractéristiques permettent l'enregistrement d'une figure d'interférence en volume entre deux faisceaux lumineux. Un tel matériau holographique correspond par exemple à un photopolymère ou de l'halogénure d'argent.

Dans un deuxième mode de réalisation, les premier et deuxième dispositifs de guidage optique peuvent être réalisés tels que :
- le premier dispositif de guidage optique soit disposé sur un substrat et soit destiné à émettre et/ou recevoir le premier faisceau lumineux selon une première direction, et que
- le deuxième dispositif de guidage optique soit formé dans le substrat et soit destiné à recevoir et/ou émettre le premier faisceau lumineux selon une deuxième direction,
et la structure de diffraction holographique peut être réalisée par la mise en œuvre des étapes suivantes :
- dépôt d'une couche de matériau holographique sur au moins une région du substrat au niveau de laquelle la structure de diffraction holographique est destinée à être réalisée ;
- émission d'un premier faisceau lumineux d'écriture par le premier dispositif de guidage optique selon la première direction, et d'un deuxième faisceau lumineux d'écriture selon une troisième direction qui n'est pas parallèle à la première direction et qui croise le premier faisceau lumineux d'écriture dans une première région de la structure de diffraction holographique qui est représentative des interférences produites entre les premier et deuxième faisceaux lumineux d'écriture ;
- émission d'un troisième faisceau lumineux d'écriture par le deuxième dispositif de guidage optique parallèle à la deuxième direction, et d'un quatrième faisceau lumineux d'écriture, correspondant à un faisceau lumineux conjugué (au sens optique) du deuxième faisceau lumineux d'écriture, selon une quatrième direction opposée à la troisième direction et qui croise le troisième faisceau lumineux d'écriture dans une deuxième région de la structure de diffraction holographique qui est représentative des interférences produites entre les troisième et quatrième faisceaux lumineux d'écriture.

Dans un troisième mode de réalisation, les premier et deuxième dispositifs de guidage optique peuvent être réalisés tels que :
- le premier dispositif de guidage optique soit disposé sur un premier substrat apte à être traversé par le premier faisceau lumineux et soit destiné à émettre et/ou recevoir le premier faisceau lumineux selon une première direction, et que
- le deuxième dispositif de guidage optique soit formé dans un deuxième substrat apte à être traversé par le premier faisceau lumineux et soit destiné à recevoir et/ou émettre le premier faisceau lumineux selon une deuxième direction,
et la structure de diffraction holographique peut être obtenue lors de la mise en œuvre des étapes suivantes :
- dépôt d'une première couche de matériau holographique sur au moins une région du premier substrat au niveau de laquelle une première région de la structure de diffraction holographique est destinée à être réalisée, puis émission d'un premier faisceau lumineux d'écriture par le premier dispositif de guidage optique selon la première direction, et d'un deuxième faisceau lumineux d'écriture selon une troisième direction qui n'est pas parallèle à la première direction et qui croise le premier faisceau lumineux d'écriture dans la première région de la structure de diffraction holographique qui est représentative des interférences produites entre les premier et deuxième faisceaux lumineux d'écriture, formant une première partie du système optique ;
- dépôt d'une deuxième couche de matériau holographique sur au moins une région du deuxième substrat au niveau de laquelle une deuxième région de la structure de diffraction holographique est destinée à être réalisée, puis émission d'un troisième faisceau lumineux d'écriture par le deuxième dispositif de guidage optique parallèle à la deuxième direction, et d'un quatrième faisceau lumineux d'écriture, correspondant à un faisceau lumineux conjugué du deuxième faisceau lumineux d'écriture, selon une quatrième direction opposée à la troisième direction et qui croise le troisième faisceau lumineux d'écriture dans la deuxième région de la structure de diffraction holographique qui est représentative des interférences produites entre les troisième et quatrième faisceaux lumineux d'écriture, formant une deuxième partie du système optique ;
- assemblage des première et deuxième parties du système optique.

Quel que soit le mode de réalisation, le procédé peut comporter en outre, entre la réalisation des premier et deuxième dispositifs de guidage optique et la réalisation de la structure de diffraction holographique, une étape d'alignement et de réglage des faisceaux lumineux d'écriture mise en œuvre en utilisant des faisceau lumineux de réglage conservant les propriétés physiques (en particulier n'engendrant pas de modification de la structure d'indice de réfraction du matériau holographique) de la ou des couches de matériau holographique utilisées pour la réalisation de la structure de diffraction holographique.

Dans l'ensemble du document, le terme « sur » est utilisé sans distinction de l'orientation dans l'espace de l'élément auquel se rapporte ce terme. Par exemple, dans la caractéristique « sur une face du premier substrat », cette face du premier substrat n'est pas nécessairement orientée vers le haut mais peut correspondre à une face orientée selon n'importe quelle direction. En outre, la disposition d'un premier élément sur un deuxième élément doit être comprise comme pouvant correspondre à la disposition du premier élément directement contre le deuxième élément, sans aucun élément intermédiaire entre les premier et deuxième éléments, ou bien comme pouvant correspondre à la disposition du premier élément sur le deuxième élément avec un ou plusieurs éléments intermédiaires disposés entre les premier et deuxième éléments.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la [Fig. 1] représente un exemple de réalisation d'un système optique, objet de la présente invention, comprenant un dispositif de couplage optique, également objet de la présente invention, selon un premier mode de réalisation ;
- les [Fig. 2] à [Fig. 5] représentent les étapes d'un procédé de réalisation d'un système optique, objet de la présente invention, comprenant un dispositif de couplage optique, également objet de la présente invention, selon le premier mode de réalisation ;
- la [Fig. 6] représente schématiquement un fonctionnement d'un système optique, objet de la présente invention, comprenant un dispositif de couplage optique, également objet de la présente invention, selon le premier mode de réalisation ;
- la [Fig. 7] représente un exemple de réalisation d'un système optique, objet de la présente invention, comprenant un dispositif de couplage optique, également objet de la présente invention, selon un deuxième mode de réalisation ;
- les [Fig. 8] à [Fig. 18] représentent les étapes d'un procédé de réalisation d'un système optique, objet de la présente invention, comprenant un dispositif de couplage optique, également objet de la présente invention, selon le deuxième mode de réalisation ;
- la [Fig. 19] représente une variante de substrat pouvant être utilisé pour la réalisation d'un système optique, objet de la présente invention, comprenant un dispositif de couplage optique, également objet de la présente invention, selon le deuxième mode de réalisation ;
- la [Fig. 20] représente un exemple de réalisation d'un système optique, objet de la présente invention, comprenant un dispositif de couplage optique, également objet de la présente invention, selon un troisième mode de réalisation ;
- les [Fig. 21] et [Fig. 22] représentent des parties d'un exemple de réalisation d'un système optique, objet de la présente invention, comprenant un dispositif de couplage optique, également objet de la présente invention, selon le troisième mode de réalisation ;
- la [Fig. 23] représente schématiquement les faisceaux lumineux servant à définir la structure de diffraction lumineuse du dispositif de couplage optique selon le deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

Le principe de fonctionnement général du dispositif de couplage optique selon l'invention est tout d'abord expliqué ci-dessous.

Le dispositif de couplage optique proposé comporte une structure de diffraction holographique correspondant à une portion de matériau dans laquelle est enregistrée une structure de diffraction complexe en 3D, dans un volume important à l'échelle de la résolution de la structure. A titre d'exemple, la résolution de motif dans cette structure de diffraction holographique peut être inférieure à 10 nm, sur une épaisseur de matériau comprise entre 10 µm et 100 µm. Cette structure de diffraction holographique réalise un couplage optique entre un premier dispositif de guidage optique, par exemple depuis lequel un premier faisceau lumineux est émis, et un deuxième dispositif de guidage optique par exemple destiné à recevoir ce premier faisceau lumineux. En variante, il est également possible que cette même structure de diffraction holographique réalise un couplage optique entre les premier et deuxième dispositifs de guidage optique et permette d'envoyer en entrée du premier dispositif de guidage optique le premier faisceau lumineux lorsque celui-ci est émis depuis le deuxième dispositif de guidage optique.

La structure de diffraction holographique est représentative d'interférences se produisant entre au moins deux faisceaux lumineux, l'un appelé faisceau objet et correspondant par exemple à un faisceau émis depuis le premier dispositif de guidage optique, et l'autre appelé faisceau de référence et correspondant par exemple à un faisceau collimaté sur une entrée du deuxième dispositif de guidage optique. Ces deux faisceaux sont représentés par des champs *E_{Obj}* et *E_{Ref}*. La superposition des deux champs *E_{Obj}* et *E_{Ref}* aboutit à un champ total *E_{Tot}* défini par la relation suivante : ${E}_{Tot} = {E}_{Obj} + {E}_{Ref}$

La structure de diffraction holographique comporte une structure d'indice optique reproduisant la figure d'intensité *I_{Tot}* du champ total *E_{Tot}* qui peut être exprimée par la relation suivante : ${I}_{Tot} = {\left|{E}_{Obj}\right|}^{2} + {\left|{E}_{Ref}\right|}^{2} + {E}_{Obj} \times {E}_{Ref} * + {E}_{Ref} \times {E}_{Obj} *$

Avec les champs *E_{Obj}** et *E_{Ref}** correspondant respectivement au champ objet conjugué et au champ de référence conjugué. La structure de diffraction holographique est donc un objet de phase H dont l'indice de réfraction varie localement proportionnellement à I_{Tot}.

Les deux derniers termes croisés de l'équation (2) ci-dessus sont ceux porteurs de la figure d'interférence du faisceau objet avec le faisceau de référence. A titre d'exemple, si les longueurs d'onde du faisceau objet et du faisceau de référence appartiennent au domaine visible, et si les faisceaux sont contra-propagatifs, le pas des franges obtenues peut être proche de 200 nm. Si les faisceaux sont co-propagatifs et forment un angle voisin de 30°, le pas des franges obtenues peut être proche de 1 µm.

L'équation (2) ci-dessus montre que le faisceau objet peut être régénéré si on éclaire la structure de diffraction holographique *H*, avec le faisceau de référence : $H \times {E}_{Ref} \to \left({E}_{Obj}\times {E}_{Ref}*\right) \times {E}_{Ref} = {E}_{Obj}$

De manière similaire, il est possible de générer les différentes composantes des faisceaux d'écriture utilisés pour réaliser la structure de diffraction holographique (faisceaux décrits plus en détails ultérieurement dans la description du procédé de réalisation du dispositif de couplage optique) en éclairant la structure de diffraction holographique avec les faisceaux adéquats. Par exemple, éclairer la structure de diffraction holographique avec le faisceau lumineux conjugué du faisceau objet permet de générer le faisceau de référence conjugué. Cela peut s'exprimer par l'équation suivante : $H \times {E}_{Obj} * \to \left({E}_{Obj}\times {E}_{Ref}*\right) \times {E}_{Obj} * = {E}_{Ref} *$

La notion de champ complexe conjugué peut être décrite par les équations suivantes qui font intervenir un terme d'amplitude et de phase : $E \left(\vec{r}\right) = {E}_{A} \left(\vec{r}\right) \times {e}^{- {iE}_{φ} \left(\vec{r}\right)}$ $E \left(\vec{r}\right) * = {E}_{A} \left(\vec{r}\right) \times {e}^{{iE}_{φ} \left(\vec{r}\right)}$ avec *E_{A}*(*̅r̅*̅) correspondant à l'amplitude du champ *E*(*̅r̅*̅) et *e*^{*iE_{φ}*(*̅r̅*̅)} correspondant à la phase du champ *E*(*̅r̅*̅).

Comme le terme de phase *Eφ* concerne en optique la propagation des ondes, la conjugaison du champ d'une onde se traduit généralement par l'inversion du sens de propagation de cette onde. Ainsi, la conjugaison d'une onde divergente génère une onde convergente.

La structure de diffraction holographique réalisée ici permet de remplir simultanément deux fonctions optiques: diriger, ou guider, ou orienter (ces trois termes, en lien avec un faisceau lumineux, sont utilisés indifféremment dans la description), le faisceau lumineux reçu par la structure de diffraction holographique depuis l'un des deux dispositifs de guidage optique vers l'axe de propagation de l'autre des deux dispositifs de guidage optique destiné à recevoir ce faisceau lumineux, comme le ferait par exemple un miroir de renvoi, et mettre en forme, ou adapter, optiquement le faisceau lumineux pour le focaliser sur le dispositif de guidage optique destiné à recevoir en entrée le faisceau lumineux, comme le ferait par exemple un assemblage d'un système symétrique comprenant des prismes et des lentilles cylindriques. Ici et dans toute la description, un faisceau lumineux est considéré comme adapté à un dispositif de guidage optique si le taux de couplage du faisceau lumineux avec un mode optique du dispositif de guidage optique excité par le faisceau lumineux est supérieur ou égal à 60 %, voire supérieur ou égal à 80 %. Pour deux faisceaux parfaitement alignés, le taux de couplage est égal au rapport entre : (1) l'intégrale au carré du produit de l'intensité normalisée du faisceau lumineux par l'intensité normalisée du mode optique excité du dispositif de guidage optique et (2) le produit de l'intégrale du carré de l'intensité normalisée du faisceau lumineux par l'intégrale du carré de l'intensité normalisée du mode optique excité du dispositif de guidage optique. Quand les faisceaux ne sont pas alignés (décalage angulaire et/ou spatial) le taux de couplage s'exprime par une équation plus complexe enseignée, dans le cas des faisceaux gaussiens, dans le document : M. Surawatari et K. Nawata « semiconductor laser to single-mode fiber coupler », Appl. Opt., vol18, n 11 pp 1847-1856 (1979).

A titre d'exemple, le premier dispositif de guidage optique est configuré pour émettre le premier faisceau lumineux depuis une face latérale du premier dispositif. Le premier faisceau lumineux est issu d'un mode optique guidé à l'intérieur du premier dispositif par un guide d'onde présentant une section rectangulaire au niveau de la face latérale. Des géométries du guide d'onde et de la section rectangulaire sont telles que le premier faisceau lumineux, dit faisceau laser, présente en champ lointain, deux lobes selon deux directions divergentes, centrées sur des maxima locaux d'intensité du faisceau laser. Le deuxième dispositif comprend un guide monomode présentant une entrée sur une face latérale du deuxième dispositif.

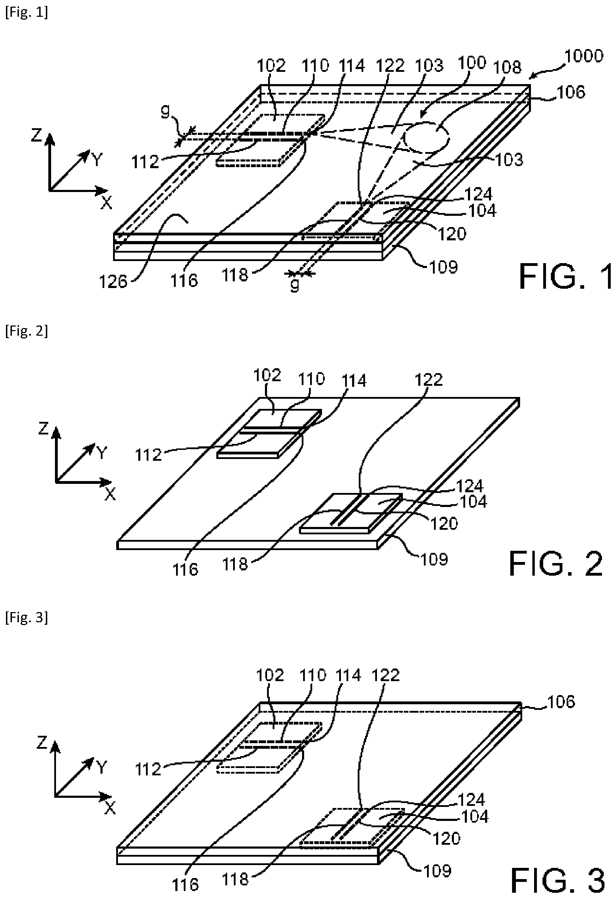

Un exemple de réalisation du dispositif de couplage optique, portant le numéro de référence 100, selon un premier mode de réalisation est décrit ci-dessous en lien avec la figure 1.

Le dispositif de couplage optique 100 est configuré pour coupler optiquement un premier dispositif de guidage optique 102 à un deuxième dispositif de guidage optique 104. Le système optique comprenant le dispositif de couplage optique 100, le premier dispositif de guidage optique 102 et le deuxième dispositif de guidage optique 104 est désigné par la référence 1000.

Le dispositif de couplage optique 100 comporte au moins une première entrée-sortie optique par laquelle le premier dispositif de guidage optique 102 est destiné à émettre et/ou recevoir un premier faisceau lumineux (émission d'un premier faisceau lumineux 103 sur l'exemple de la figure 1), et une deuxième entrée-sortie optique par laquelle le deuxième dispositif de guidage optique 104 est destiné à recevoir et/ou émettre le premier faisceau lumineux (réception du premier faisceau lumineux 103 sur l'exemple de la figure 1). Le dispositif de couplage optique 100 comporte une couche de matériau dit « holographique » 106, c'est-à-dire un matériau dans lequel est formée une structure de diffraction holographique 108 configurée pour guider et adapter le premier faisceau lumineux 103 depuis l'une des première et deuxième entrées-sorties optiques du dispositif de couplage optique 100 vers l'autre de ces première et deuxième entrées-sorties.

Sur l'exemple de la figure 1, les premier et deuxième dispositifs de guidage optique 102, 104 et la couche 106 sont disposés sur un même substrat 109. En outre, dans l'exemple décrit, l'un des premier et deuxième dispositifs de guidage optique 102, 104 comporte un élément d'émission lumineuse. Par exemple, le premier dispositif de guidage optique 102 peut correspondre à un premier circuit photonique réalisé sous la forme d'une puce laser à base de matériau III-V et émettant le premier faisceau lumineux 103, et le deuxième dispositif de guidage optique 104 peut correspondre à un deuxième circuit photonique réalisé sous la forme d'une puce de guidage optique à base de SiN.

Dans l'exemple de réalisation représenté sur la figure 1, le premier dispositif de guidage optique 102 comporte deux guides optiques 110, 112 distincts. Le premier dispositif de guidage optique 102 comporte deux entrées-sorties de guidage 114, 116, disposées sur une première face latérale du premier dispositif de guidage optique 102, chacune associée à l'un des deux guides optiques 110, 112. Les guides optiques 110, 112 sont aptes à émettre et/ou recevoir des faisceaux d'ouverture numériques identiques et de tailles au niveau entrées-sorties de guidage 114, 116 égales, mais pas forcément polarisés de la même façon. Les guides optiques 110, 112 sont par exemples constitués des même matériaux et sont géométriquement identiques. Les deux entrées-sorties de guidage 114, 116 sont couplées optiquement à la première entrée-sortie optique du dispositif de couplage optique 100 qui est formée par le matériau de la couche 106 disposé contre ces deux entrées-sorties de guidage 114, 116. De manière analogue, le deuxième dispositif de guidage optique 104 comporte deux guides optiques 118, 120 distincts et deux entrées-sorties de guidage 122, 124, disposées sur une deuxième face latérale du deuxième dispositif de guidage optique 102, chacune associée à l'un des deux guides optiques 118, 120. Les guides optiques 118, 120 sont aptes à émettre et/ou recevoir des faisceaux d'ouverture numériques identiques et de tailles au niveau entrées-sorties de guidage 122, 124 égales, mais pas forcément polarisés de la même façon. Les guides optiques 118, 120 sont par exemples constitués des même matériaux et sont géométriquement identiques. Comme représenté sur la figure 1, la couche 106 a de préférence une interface avec chacune des première et deuxième faces latérales, la couche 106 recouvre par exemple les premier et deuxième dispositifs de guidage optique 102, 104. Les deux entrées-sorties de guidage 122, 124 sont couplées optiquement à la deuxième entrée-sortie optique du dispositif 100 qui est formée par le matériau de la couche 106 disposé contre ces deux entrées-sorties de guidage 122, 124. Les deux entrées-sorties 114 et 122 sont positionnées de sorte que le premier faisceau lumineux 103 soit couplé de l'une à l'autre de ces entrées-sorties 114, 122 lorsque la structure holographique est enregistrée en utilisant les entrées-sorties 116, 124. Sur l'exemple de la figure 1, la distance entre le premier dispositif de guidage optique 102 et la structure de diffraction holographique 108 est égale à celle entre le deuxième dispositif de guidage optique 104 et la structure de diffraction holographique 108.

Les guides optiques 110 et 118, appelés par exemple guides d'opération, sont destinés à être utilisés lorsque le système optique 1000 est utilisé pour transmettre le premier faisceau lumineux 103 de l'un à l'autre des dispositifs de guidage optique 102, 104, et les guides optiques 112, 120, appelés par exemple guides d'écriture, sont destinés à être utilisés lors de la réalisation du dispositif de couplage optique 100 (qui sera détaillée plus loin). La figure 1 représente le système optique 1000 lors de son utilisation pour transmettre le premier faisceau lumineux 103 depuis la première entrée-sortie de guidage 114 du premier dispositif de guidage optique 102, le premier faisceau lumineux 103 émis étant ensuite guidé, c'est-à-dire redirigé, et focalisé par la structure de diffraction holographique 108 sur la deuxième entrée-sortie de guidage 122 du deuxième dispositif de guidage optique 104.

Au sein de chacun des premier et deuxième dispositifs de guidage optique 102, 104, la valeur de la distance *g* entre le guide d'écriture et le guide d'opération au niveau des première et deuxième faces latérales respectives est avantageusement telle que *g* > 2.λ, avec λ correspondant à la longueur d'onde du premier faisceau lumineux 103 transmis lors du fonctionnement du système optique 1000, afin d'éviter la diaphonie entre le guide d'écriture et le guide d'opération de chaque dispositif de guidage optique. A titre d'exemple, la distance *g* peut être égale à 2 µm. De manière avantageuse, la valeur de la distance g est également très inférieure aux dimensions du premier faisceau lumineux 103 reçu au niveau de la structure de diffraction holographique 108 (par exemple de l'ordre d'une ou plusieurs centaines de microns, c'est-à-dire telle que *g << ΔΦ.dₕₒₗₒ,* avec *ΔΦ* correspondant à la divergence en radians du premier faisceau lumineux 103 dans le plan xy visible sur la figure 1 (plan incluant la direction d'émission du premier faisceau lumineux 103 par le premier dispositif de guidage optique 102, appelée première direction, et perpendiculaire au plan principal du système optique 1000), et *dₕₒₗₒ* correspondant à la distance entre l'entrée-sortie de guidage laser par laquelle le premier faisceau lumineux 103 est émis et la structure de diffraction holographique 108. La valeur minimum de la distance *dₕₒₗₒ* peut être définie en fonction des dimensions des dispositifs de guidage optique 102, 104 pour assurer l'accès au guide d'écriture 124 du deuxième dispositif de guidage optique 104.

En variante, il est possible que le premier dispositif de guidage optique 102 et/ou le deuxième dispositif de guidage optique 104 ne comporte qu'un seul guide optique servant à la fois lors de l'utilisation du système optique 1000 pour transmettre un faisceau lumineux d'un dispositif de guidage optique à l'autre, et lors de la réalisation du système optique 1000 pour transmettre les faisceaux lumineux d'écriture.

Dans le premier mode de réalisation, le premier dispositif de guidage optique 102 est destiné à émettre et/ou recevoir le premier faisceau lumineux 103 au niveau de la première entrée-sortie optique du dispositif de couplage optique 100 selon une première direction (parallèle à l'axe X sur la figure 1). De plus, le deuxième dispositif de guidage optique 104 est destiné à recevoir et/ou émettre le premier faisceau lumineux 103 au niveau de la deuxième entrée-sortie optique du dispositif de couplage optique 100 selon une deuxième direction (parallèle à l'axe Y sur la figure 1) qui n'est pas parallèle à la première direction et qui croise la première direction dans la structure de diffraction holographique 108. Sur l'exemple de la figure 1, le premier faisceau lumineux 103 sortant du premier dispositif de guidage optique 102 est divergent. En outre, sur l'exemple de la figure 1, l'angle formé entre les première et deuxième directions est de 90°, la valeur de cet angle pouvant toutefois être différente de 90°.

La structure de diffraction holographique 108 est représentative d'interférences destinées à se produire entre le premier faisceau lumineux 103 lorsque celui-ci est émis dans la première entrée-sortie optique du dispositif de couplage optique 100 selon la première direction et un deuxième faisceau lumineux focalisé sur la deuxième entrée-sortie optique du dispositif de couplage optique 100 selon une troisième direction opposée à la deuxième direction et qui croise le premier faisceau lumineux 103 dans une région de la structure de diffraction holographique 108. Ce deuxième faisceau lumineux n'est pas visible sur la figure 1 car sur cette figure, le système optique 1000 est représenté lorsque le premier faisceau lumineux est transmis depuis le premier dispositif de guidage optique 102 jusqu'au deuxième dispositif de guidage optique 104.

Dans ce premier mode de réalisation, la structure de diffraction holographique 108 est formée dans une seule portion de matériau correspondant au matériau de la couche 106. Dans l'exemple de réalisation décrit, la couche 106 correspond à une couche de matériau holographique tel qu'un photopolymère, par exemple le photopolymère commercialisé sous le nom Bayfol^{®} par la société Covestro, et la structure de diffraction holographique 108 correspond à une région enregistrée de la couche 106. Dans le cas de l'utilisation d'un photopolymère, sensible à l'oxygène durant la phase d'écriture, la couche 106 est protégée par une couche 126 de matériau étanche à l'oxygène recouvrant la couche 106 et les premier et deuxième dispositifs de guidage optique 102, 104, et comprenant par exemple du SiO₂. En variante, la couche 126 peut correspondre à un film plastique ou un substrat fin de matériau étanche à l'oxygène.

Le système optique 1000 peut servir à guider des faisceaux lumineux dont la ou les longueurs d'onde appartiennent au domaine infrarouge et/ou au domaine visible.

Avec le dispositif de couplage optique 100 selon le premier mode de réalisation décrit ci-dessus, le couplage entre les dispositifs de guidage optique 102 et 104 est donc réalisé en trois points : un premier point formé par l'entrée-sortie 114, un deuxième point formé par la structure de diffraction 108, un troisième point formé par l'entrée-sortie 122.

Un procédé de réalisation du système optique 1000 précédemment décrit en lien avec la figure 1 est décrit ci-dessous en lien avec les figures 2 à 5.

Les premier et deuxième dispositifs de guidage optique 102, 104 sont tout d'abord réalisés et/ou solidarisés, par exemple par collage de type adhésif, eutectique ou collage direct, sur le substrat 109 (voir figure 2). Le premier dispositif de guidage optique 102 est aligné grossièrement par rapport au deuxième dispositif de guidage optique 104, par exemple avec une tolérance angulaire comprise entre -10 degrés et +10 degrés, une tolérance en translation comprise entre -10 µm et +10 µm Le substrat 109 peut être une plaque, par exemple une plaque de silicium, sur laquelle sont réalisés et/ou solidarisés plusieurs couples de premier et deuxième dispositifs de guidage optique 102, 104.

La couche de matériau 106 destinée à former la structure de diffraction holographique 108 est ensuite déposée sur le substrat 109, en recouvrant également les premier et deuxième dispositifs de guidage optique 102, 104 (voir figure 3). Dans l'exemple de réalisation décrit, le matériau de la couche 106 correspond à un photopolymère. L'épaisseur de la couche 106 est par exemple comprise entre 5 µm et 500 µm. La couche 106 est par exemple déposée en mettant en œuvre un dépôt à la tournette (« spin coating » en anglais) ou un dépôt à la goutte (« drop casting » en anglais). Le matériau est ensuite soumis à un flux d'air pour retirer le solvant de la résine et rigidifier la couche 106.

La couche 126 de matériau étanche à l'oxygène est ensuite déposée de manière à recouvrir la couche 106.

Une étape d'alignement et de réglage est ensuite mise en œuvre avant d'utiliser les faisceaux lumineux d'écriture qui formeront la structure de diffraction holographique 108. Cette étape d'alignement et de réglage utilise des faisceaux lumineux de réglage 128, 129 ne modifiant pas physiquement ou chimiquement la couche 106.

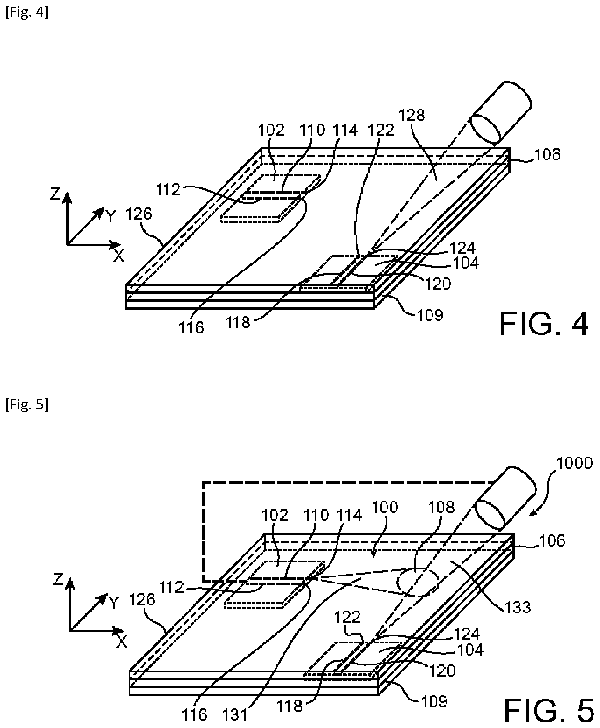

Tout d'abord un premier faisceau de réglage 128 est aligné avec le guide d'écriture 120, ceci est atteint lorsque des caractéristiques géométriques du premier faisceau de réglage 128, comme son orientation, sa taille au niveau de la deuxième face latérale, son ouverture numérique, sa polarisation, maximise l'intensité d'une partie du premier faisceau de réglage 128 couplée au guide d'écriture 120. Le faisceau lumineux de réglage 128 est donc focalisé vers l'entrée du guide d'écriture 120 du deuxième dispositif de guidage optique 104, c'est-à-dire sur l'entrée-sortie de guidage 124 (voir figure 4). Le faisceau lumineux de réglage 128 est par exemple issu d'une fibre optique, munie d'un système optique de couplage et éventuellement d'un polariseur. L'étape d'alignement est par exemple active. La lumière issue du premier faisceau lumineux de réglage 128 couplée dans le guide d'écriture 120 est alors mesurée par un circuit photométrique pouvant comporter une photodiode intégrée au deuxième dispositif de guidage optique 104 ou une photodiode externe au deuxième dispositif de guidage optique 104. Le guide d'écriture 120 étant distinct du guide d'opération 118, le circuit photométrique ne perturbe pas le deuxième dispositif de guidage optique 104, en fonctionnement. De plus, le guide d'écriture 120 ne servant qu'à l'écriture de la structure de diffraction holographique 108, le circuit photométrique peut recevoir toute la lumière du premier faisceau lumineux de réglage 128 couplée, ainsi le matériau holographique de la couche 106 peut être insolée avec une puissance lumineuse réduite durant l'étape d'alignement. La longueur d'onde du faisceau lumineux de réglage 128 et/ou sa puissance sont choisies pour être en dehors de la gamme de sensibilité du matériau holographique de la couche 106, c'est-à-dire telles que le faisceau lumineux de réglage 128 ne transforme pas le matériau de la couche 106. Par exemple, pour un photopolymère ayant une photosensibilité à une longueur d'onde d'environ 532 nm (correspondant à la couleur verte), il est possible d'émettre, pour ce réglage, un faisceau laser dont la longueur d'onde est d'environ 650 nm (correspondant à la couleur rouge). En outre, la puissance du faisceau lumineux de réglage est par exemple de 0,1 µW lorsqu'une puissance de 0,5 µW peut être nécessaire pour transformer le photopolymère. Cette étape de réglage permet d'optimiser le positionnement d'éléments d'optique, comme, le cas échéant, un axe optique ou une focale du système optique, ou une orientation du polariseur, utilisés sans modifier la structure physique ou chimique du matériau de la couche 106.

Ensuite, lors d'une deuxième sous-étape de l'étape d'alignement, la lumière de la source utilisée pour émettre le faisceau lumineux 128 est séparée en deux parties par un diviseur de faisceau. La première partie de la lumière émise est toujours focalisée vers le guide d'écriture 120 du deuxième dispositif de guidage optique 104 et continue de former le premier faisceau de réglage 128, et la deuxième partie de la lumière émise est injectée dans le guide d'écriture 112 du premier dispositif de guidage optique 102 afin d'obtenir un deuxième faisceau lumineux de réglage 129. La deuxième sous-étape d'alignement peut comprendre également un réglage actif du diviseur de faisceau à l'aide d'une photodiode intégrée ou externe au premier dispositif de guidage optique 102. Alternativement, le premier faisceau de réglage 128 est obturé pendant le réglage du diviseur de faisceau. A l'intersection des premier et deuxième faisceaux lumineux de réglage 128 et 129, des interférences se produisent. Des caractéristiques non géométriques de la lumière émise sont alors modifiées de manière à ce que la puissance (par exemple augmentée à une valeur égale à 0,5 µW), la cohérence, la durée d'exposition de la couche 106 et la longueur d'onde (par exemple modifiée à une valeur égale à 532 nm ou 850 nm) des faisceaux lumineux émis, qui correspondent alors à des faisceaux lumineux d'écriture (faisceau de référence 131 issu du premier dispositif de guidage optique 102 et faisceau objet 133, sur la figure 5), permettent l'enregistrement de la figure d'interférences obtenue dans le matériau de la couche 106, ceci afin de réaliser la structure de diffraction holographique 108. La lumière utilisée pour l'enregistrement de la figure d'interférence dans le matériau de la couche 106 est avantageusement monochromatique.

La structure de diffraction holographique obtenue subi ensuite un traitement en l'exposant à un faisceau lumineux non cohérent, et éventuellement en la soumettant à un recuit, pour améliorer et stabiliser ses caractéristiques, notamment les variations d'indice optique au sein du matériau de la structure de diffraction holographique 108.

Ainsi, un faisceau lumineux incident issu du guide d'écriture 112 du premier dispositif optique 102 génère un faisceau transmis présentant les caractéristiques géométriques du faisceau objet 133 et du premier faisceau de réglage 128, par éclairement de la structure de diffraction holographique 108, donc maximisant l'intensité d'une partie du faisceau transmis couplée au guide d'écriture 120 du deuxième dispositif de guidage optique 104. Le faisceau lumineux incident est par conséquent guidé, c'est-à-dire dirigé, depuis le guide d'écriture 112 du premier dispositif optique 102 vers le guide d'écriture 120 du deuxième dispositif de guidage optique 104, dans le sens qu'une partie de l'intensité du faisceau incident est couplée dans le guide d'écriture 120 du deuxième dispositif. Le faisceau lumineux incident est également adapté au guide d'écriture 120 du deuxième dispositif de guidage optique 104, du fait que l'intensité de la partie du faisceau incident couplée est maximisée.

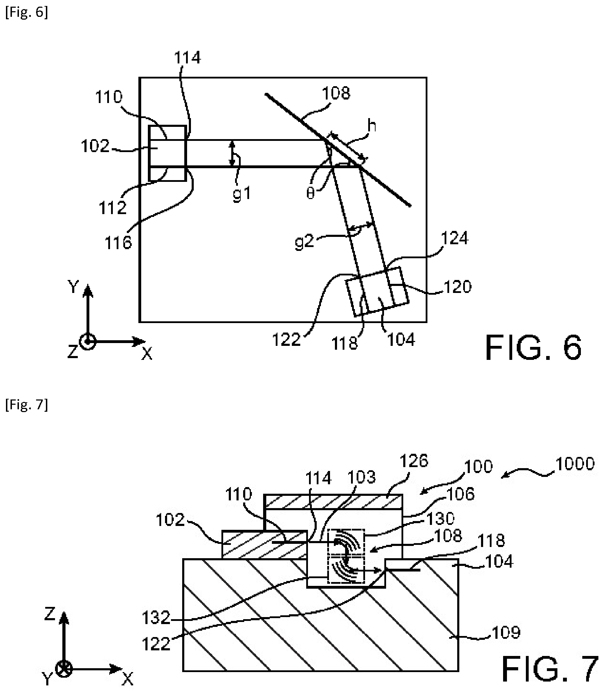

Les deux entrées-sorties de guidage 114, 116 du premier dispositif de guidage optique 102 sont séparées l'une de l'autre d'une distance, appelée *g1* sur la figure 6, et celle séparant l'une de l'autre les deux entrées-sorties de guidage 122, 124 du deuxième dispositif de guidage optique 104 est appelée *g2* sur la figure 6. Ces distances sont telles que les faisceaux émis depuis l'un ou l'autre des guides optiques du premier dispositif de guidage optique 102 sont bien guidés jusqu'au guide optique correspondant du deuxième dispositif de guidage optique 104, comme cela est représenté sur la figure 6 où la structure de diffraction holographique 108 est représentée sous la forme symbolique d'un miroir réflecteur. Le premier faisceau lumineux 103 interagît avec la structure de diffraction holographique 108 de façon similaire que le faisceau incident, ainsi le premier faisceau lumineux 103 est guidé vers le guide d'opération 118 du deuxième dispositif de guidage optique 104 et est adapté par la structure de diffraction holographique 108.

Le procédé de réalisation décrit ci-dessus peut avantageusement être mis en œuvre de manière à réaliser collectivement et simultanément plusieurs systèmes optiques 1000 sur un même substrat 109. Les différents systèmes optiques 1000 peuvent ensuite être séparés les uns des autres par une découpe du substrat 109.

Un exemple de réalisation d'un système optique 1000 comprenant un dispositif de couplage optique 100 selon un deuxième mode de réalisation est décrit ci-dessous en lien avec la figure 7. Seules les différences avec le premier mode de réalisation sont décrites.

Contrairement au premier mode de réalisation dans lequel le couplage entre les dispositifs de guidage optique 102 et 104 est donc réalisé en trois points, le dispositif de couplage optique 100 selon ce deuxième mode de réalisation réalise un couplage en quatre points entre les dispositifs de guidage optique 102 et 104.

Dans l'exemple de réalisation particulier décrit, le premier dispositif de guidage optique 102 correspond à une puce par exemple similaire à celle précédemment décrite en lien avec le premier mode de réalisation, et le deuxième dispositif de guidage optique 104 comporte un ou plusieurs guides optiques directement intégrés dans le substrat 109.

Dans ce deuxième mode de réalisation, la structure de diffraction holographique 108 comporte une première région 130 représentative de premières interférences destinées à se produire entre le premier faisceau lumineux 103 lorsque celui-ci est destiné à être émis depuis la première entrée-sortie optique du dispositif de couplage optique 100 selon une première direction (parallèle à l'axe x sur la figure 7) et un deuxième faisceau lumineux destiné à être émis selon une troisième direction (parallèle à l'axe z sur la figure 7) qui n'est pas parallèle à la première direction et qui croise le premier faisceau lumineux 103 dans la première région 130 de la structure de diffraction holographique 108. Dans l'exemple décrit ici, les première et troisième directions sont sensiblement perpendiculaires l'une par rapport à l'autre.

La structure de diffraction 108 comporte également une deuxième région 132, distincte de la première région 130 et représentative de deuxièmes interférences destinées à se produire entre un troisième faisceau lumineux destiné à être émis depuis la deuxième entrée-sortie optique du dispositif de couplage optique 100 parallèlement à la deuxième direction et un quatrième faisceau lumineux destiné à être émis selon une quatrième direction opposée à la troisième direction et qui croise le troisième faisceau lumineux dans la deuxième région 132 de la structure de diffraction holographique 108. Dans l'exemple décrit ici, les deuxième et quatrième directions sont sensiblement perpendiculaires l'une par rapport à l'autre.

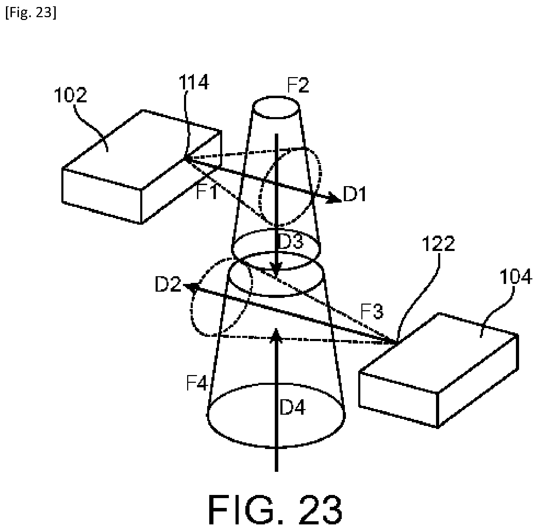

La figure 23 représente schématiquement les différents faisceaux lumineux décrits ci-dessus, sur laquelle les légendes suivantes sont utilisées :
F1 : premier faisceau lumineux ;
F2 : deuxième faisceau lumineux ;
F3 : troisième faisceau lumineux ;
F4 : quatrième faisceau lumineux ;
D1 : première direction ;
D2 : deuxième direction ;
D3 : troisième direction ;
D4 : quatrième direction.

Sur la figure 7, les régions 130, 132 sont délimitées symboliquement par des traits pointillés.

Dans l'exemple de réalisation décrit, les dispositifs de guidage optique 102, 104 comportent chacun deux guides optiques distincts, comme précédemment décrit en lien avec la figure 1 (sur la figure 7, un seul des guides de chaque dispositif de guidage optique 102, 104 est représenté).

Ainsi, lors de l'utilisation du système optique 1000, le premier faisceau lumineux 103 émis depuis l'entrée-sortie de guidage 114 du premier dispositif de guidage optique 102 arrive dans la première région 130 de la structure de diffraction holographique 108, est orienté par celle-ci en direction de la deuxième région 132 de la structure de diffraction holographie 108 pour être réorienté et focalisé sur l'entrée-sortie de guidage 122 du deuxième dispositif de guidage optique 104. Sur la figure 7, le trajet suivi par le premier faisceau lumineux 103 au sein du dispositif de couplage optique 100 est représenté symboliquement par des flèches.

Avec le dispositif de couplage optique 100 selon le deuxième mode de réalisation décrit ci-dessus, le couplage entre les dispositifs de guidage optique 102 et 104 est donc réalisé en quatre points : un premier point formé par l'entrée-sortie 114, un deuxième point formé par la première région 130 de la structure de diffraction 108, un troisième point formé par la deuxième région 132 de la structure de diffraction 108, et un quatrième point formé par l'entrée-sortie 122.

Dans l'exemple de réalisation décrit ci-dessus en lien avec la figure 7, les première et deuxième directions, qui correspondent ici respectivement à la direction d'émission du premier faisceau lumineux 103 depuis l'entrée-sortie 114 par le premier dispositif de guidage optique 102 et à la direction de réception du premier faisceau lumineux 103 sur l'entrée-sortie 122 par le deuxième dispositif de guidage optique 104, sont sensiblement parallèles l'une par rapport à l'autre. En variante, il est possible que les première et deuxième directions ne soient pas sensiblement parallèles l'une par rapport à l'autre, mais, par exemple, sensiblement perpendiculaires l'une par rapport à l'autre. Par exemple, en considérant les axes X, Y et Z de la figure 7, la première direction peut être sensiblement parallèle à l'axe X, les troisième et quatrième directions peuvent être sensiblement parallèles à l'axe Z, et la deuxième direction peut être sensiblement parallèle à l'axe Y.

En variante, il est possible que le premier faisceau lumineux 103 soit émis depuis le deuxième dispositif de guidage optique 104 et se retrouve focalisé sur l'entrée-sortie de guidage 114 du premier dispositif de guidage optique 102 grâce à la structure de diffraction holographique 108. Le trajet obtenu correspond alors au trajet inverse de celui représenté sur la figure 7.

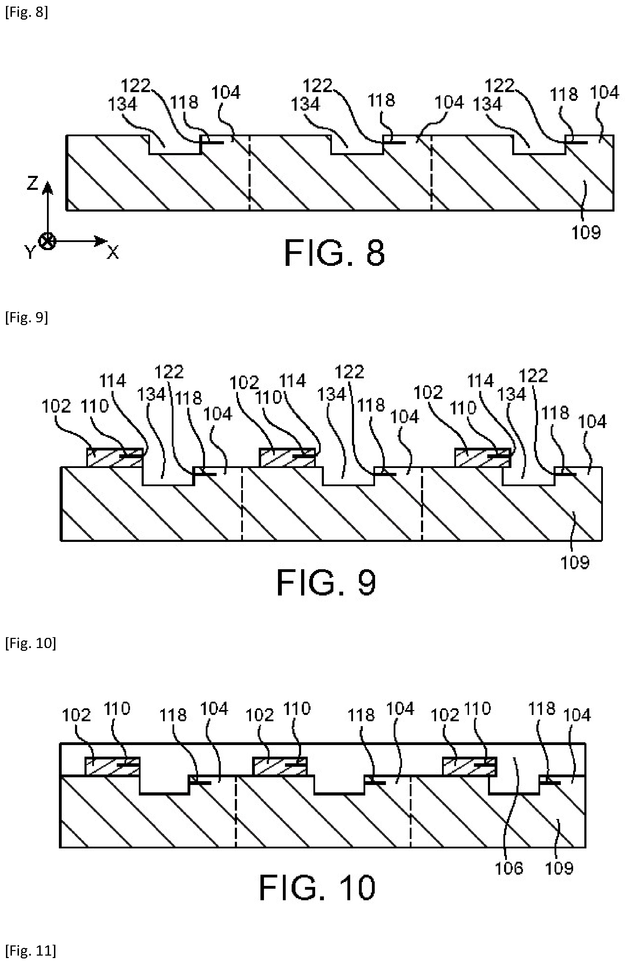

Un procédé de réalisation du système optique 1000 précédemment décrit en lien avec la figure 7 est décrit ci-dessous en lien avec les figures 8 à 18. Dans l'exemple décrit en lien avec ces figures, plusieurs systèmes optiques 1000 sont réalisés collectivement à partir d'un même substrat 109.

Le substrat 109 comporte au moins un matériau transparent aux longueurs d'onde des faisceaux lumineux qui seront utilisés pour réaliser les structures de diffraction holographiques 108 des systèmes optiques 1000.

Les deuxièmes dispositifs de guidage optique 104 sont réalisés dans le substrat 109.

Des cavités 134 sont gravées localement dans le substrat 109 au niveau de régions dans lesquelles les structures de diffraction holographiques 108 seront réalisées (voir figure 8). Ces cavités 134 sont réalisées avec une profondeur suffisante pour que les entrées-sorties de guidage 122, 124 des deuxièmes dispositifs de guidage optique 104 soient par la suite en contact avec le matériau de la couche 106 dans laquelle les structures de diffraction holographiques 108 seront réalisées.

Les premiers dispositifs de guidage optique 102 sont ensuite disposés et solidarisés, par exemple par collage de type adhésif, eutectique ou collage direct, sur le substrat 109 (voir figure 9). Comme cela est visible sur la figure 9, le positionnement des premiers dispositifs de guidage optique 102 par rapport aux deuxièmes dispositifs de guidage optique 104 n'est pas nécessairement réalisé avec une grande précision (une précision de l'ordre d'une dizaine de microns et d'une dizaine de degrés peut être suffisante) et des décalages de la position des premiers dispositifs de guidage optique 102 par rapport à leur position de référence sont tolérables.

La couche 106 est ensuite déposée sur le substrat 109 en recouvrant les premiers et deuxièmes dispositifs de guidage optique 102, 104 (voir figure 10). Le matériau de la couche 106 remplit notamment les cavités 134 précédemment gravées dans le substrat 109. Le matériau de la couche 106 correspond à un photopolymère. Le matériau de la couche 106 peut ensuite être traité pour en retirer le solvant utilisé pour son dépôt.

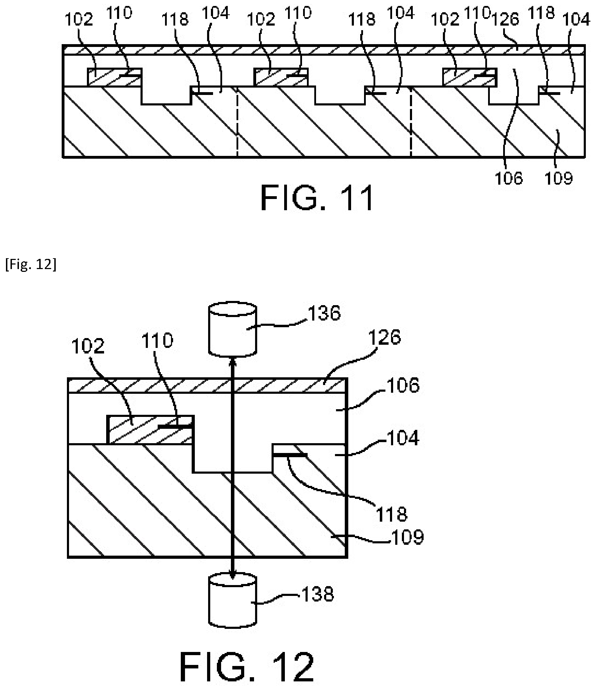

La couche 126 de matériau étanche à l'oxygène est ensuite déposée sur la couche 106 (voir figure 11). Comme pour le substrat 109, la couche 126 comporte au moins un matériau transparent aux longueurs d'onde des faisceaux lumineux qui seront utilisés pour réaliser les structures de diffraction holographiques 108, ce matériau correspondant par exemple à du SiO₂.

Les étapes permettant la réalisation des structures de diffraction holographique 108 sont ensuite mises en œuvre. Sur les figures 12 à 15, la réalisation d'une seule structure de diffraction holographique 108 est décrite et représentée.

Deux éléments 136, 138 d'émission / réception de faisceaux lumineux destinés à croiser les trajectoires d'émission / réception lumineuse des dispositifs de guidage optique 102, 104 sont positionnés tel que ces faisceaux lumineux traversent des parties de la couche 106 dans lesquelles la structure de diffraction holographique 108 est destinée à être réalisée (voir figure 12). Ces éléments 136, 138 correspondent par exemple à des fibres optiques, et sont alignés l'une en face de l'autre. Ces fibres optiques sont par exemple équipées de collimateurs, et éventuellement de polariseurs.

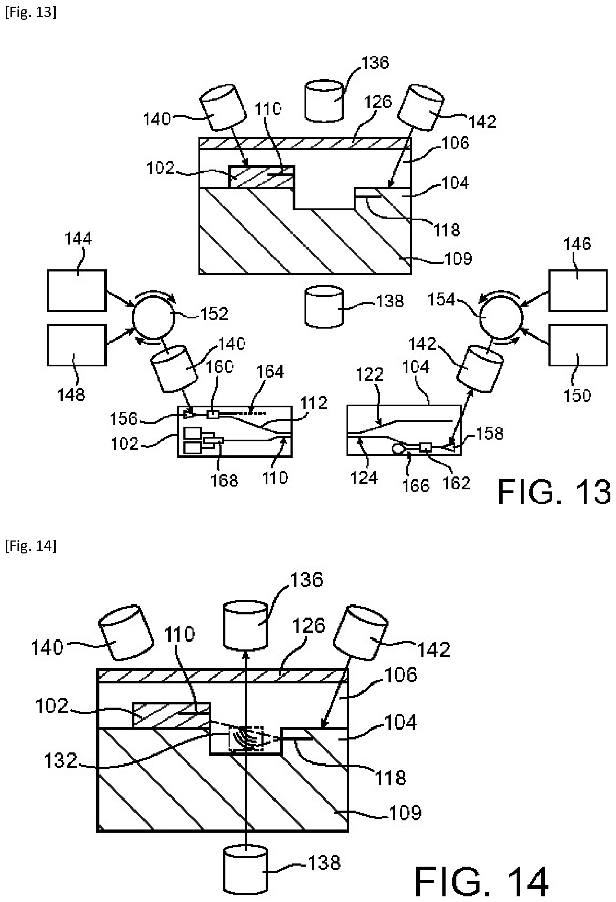

Deux éléments 140, 142 d'émission lumineuse sont également couplés aux premier et deuxième dispositifs de guidage optique 102, 104. Ces éléments 140, 142 correspondent par exemple à des fibres optiques auxquelles sont couplés des éléments émissifs laser 144, 146 et des puissance-mètres optiques 148, 150 par l'intermédiaire de circulateurs 152, 154. Les guides d'écriture 112, 124 des premier et deuxième dispositifs de guidage optique 102, 104 sont également munis d'éléments de réception optique 156, 158 permettant de transmettre les faisceaux lumineux reçus depuis les éléments 140, 142 dans les guides d'écriture 112, 124 en passant par un diviseur 160, 162 (correspondant par exemple à un interféromètre multimode configuré pour transmettre un flux minimal dans la couche 106 à la longueur d'onde de réglage et maximal à la longueur d'onde d'écriture) et un réflecteur 164, 166 (correspondant à un miroir de Bragg 164 et une boucle 166 dans l'exemple représenté sur la figure 13) renvoyant la lumière dans l'élément 140, 142. La lumière renvoyée aux éléments 140, 142 est mesurée par les puissance-mètres optiques 148, 150. Une étape d'alignement permet de maximiser les flux lumineux issus des éléments émissifs laser 144, 146 reçus par les puissance-mètres optiques 148, 150. Il convient de noter que sur la figure 13, l'élément émissif lumineux du premier dispositif de guidage optique 102 qui sera utilisé lors du fonctionnement du système optique 1000 est visible et désigné par la référence 168.

Après ces étapes de réglage et d'alignement des éléments émissifs 136, 138, 140 et 142, chacune des régions 130, 132 de la structure de diffraction holographique 108 est réalisée. Dans l'exemple décrit, la deuxième région 132 est tout abord réalisée en émettant, par les éléments émissifs 138 et 142, des faisceaux lumineux engendrant la transformation d'une partie du matériau de la couche 106 et enregistrant ainsi la figure d'interférence engendrée au croisement des faisceaux lumineux émis par ces éléments émissifs 138, 142 (voir figure 14). Le faisceau émis par l'élément 142 et émis en sortie du deuxième dispositif de guidage optique 104 est appelé troisième faisceau lumineux, et le faisceau émis par l'élément émissif 138 est appelé quatrième faisceau lumineux.

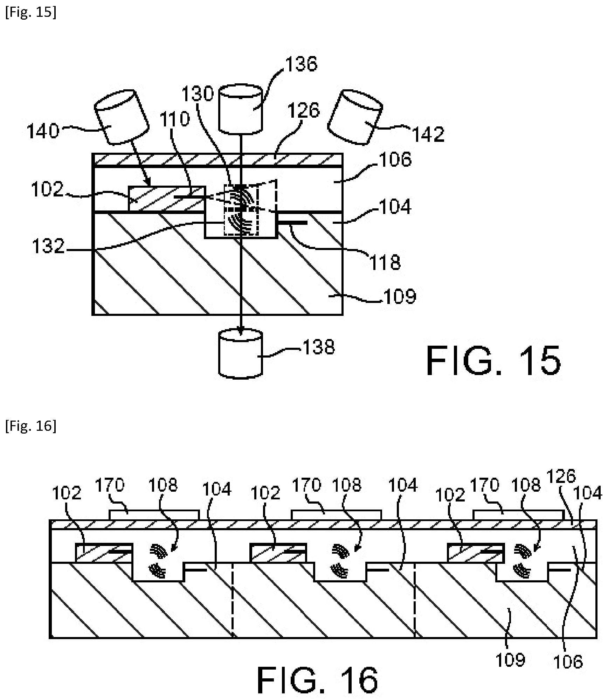

La première région 130 est ensuite réalisée en émettant, par les éléments émissifs 136, 140, des faisceaux lumineux engendrant la transformation d'une partie du matériau de la couche 106 et enregistrant ainsi la figure d'interférence engendrée au croisement des faisceaux lumineux émis par ces éléments émissifs 136, 140 (voir figure 15). Le faisceau émis par l'élément 140 et émis en sortie du premier dispositif de guidage optique 102 correspond au premier faisceau lumineux, et le faisceau émis par l'élément émissif 136 est appelé deuxième faisceau lumineux. Lors de ces deux phases d'écriture, similairement au premier mode de réalisation, des caractéristiques non géométriques des faisceaux lumineux émis par les éléments émissifs 136, 138, 140, 142 sont modifiées pour permettre l'enregistrement des figures d'interférence dans le matériau de la couche 106.

Les première et deuxième régions 130, 132 de la structure de diffraction holographique 108 sont de préférence réalisées séquentiellement afin d'éviter des phénomènes d'interférences autres que ceux générant la structure de diffraction holographique 108.

Dans l'exemple ci-dessus, la deuxième région 132 est réalisée avant la première région 130. En variante, il est possible que la première région 130 soit réalisée avant la deuxième région 132.

Après la réalisation de la structure de diffraction holographique 108, il est possible de vérifier le couplage réalisé par le dispositif de couplage optique 100 en émettant le premier faisceau lumineux depuis l'élément 140 qui est transmis à l'élément 142 à travers le premier dispositif de guidage optique 102, la structure de diffraction holographique 108 et le deuxième dispositif de guidage optique 104. Le faisceau lumineux reçu peut être mesuré par le puissance-mètre optique 150 qui est couplé à l'élément 142.

Après la réalisation des structures de diffraction holographique 108, les systèmes optiques 1000 sont achevés en déposant une résine de photolithographie 170 sur la couche 126 selon un motif définissant les portions des couches 106 et 126 à conserver (figure 16).

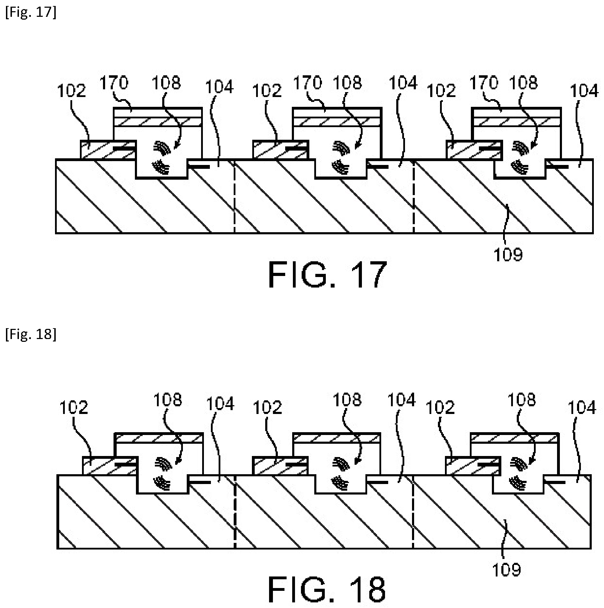

Les couches 106 et 126 sont ensuite gravées selon le motif défini par la résine de photolithographie 170 (figure 17).

La résine 170 est ensuite retirée (figure 18).

Le substrat 109 est ensuite découpé afin de singulariser les différents systèmes optiques 1000 réalisés.

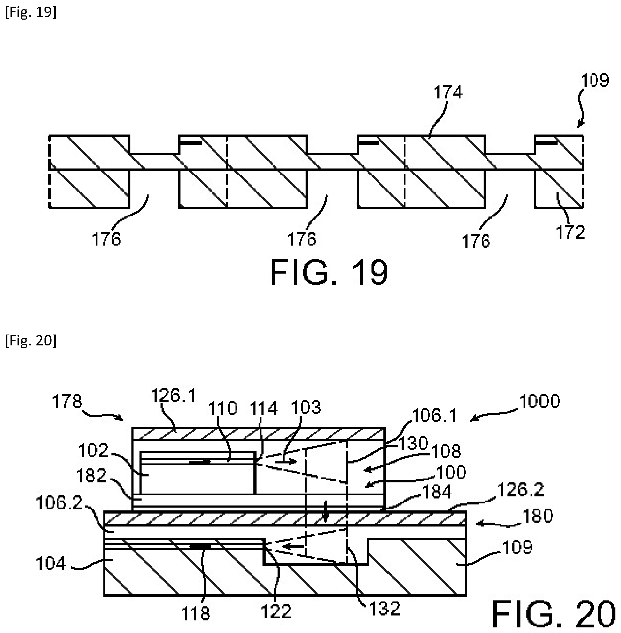

Dans l'exemple de réalisation décrit ci-dessus, le substrat 109 comporte un matériau optiquement transparent afin qu'il puisse être traversé par le faisceau lumineux émis par l'élément 138 lors de la réalisation des structures de diffraction holographiques 108. En variante, il est possible d'utiliser un substrat 109 qui ne soit pas complètement transparent tel que celui représenté par exemple sur la figure 19 qui comporte une couche de semi-conducteur non transparent 172, par exemple à base de silicium, sur laquelle est disposée une couche de matériau transparent 174, par exemple une couche d'oxyde enterré (par exemple à base de SiO₂). Des trous borgnes 176 sont réalisés à travers la couche 172 afin que les faisceaux lumineux émis par l'élément 138 lors de la réalisation des structures de diffraction holographiques 108 atteignent le matériau de la couche 106.

Un exemple de réalisation d'un système optique 1000 comprenant un dispositif de couplage optique 100 selon un troisième mode de réalisation est décrit ci-dessous en lien avec la figure 20. Seules les différences avec le deuxième mode de réalisation sont décrites.

Comme dans le deuxième mode de réalisation précédemment décrit, le dispositif de couplage optique 100 selon le troisième mode de réalisation propose un couplage entre les dispositifs de guidage optique 102 et 104 qui soit réalisé en quatre points : un premier point formé par l'entrée-sortie 114, un deuxième point formé par la première région 130 de la structure de diffraction 108, un troisième point formé par la deuxième région 132 de la structure de diffraction 108, et un quatrième point formé par l'entrée-sortie 122. Toutefois, contrairement au deuxième mode de réalisation dans lequel la structure de diffraction holographique 108 est réalisée dans une seule portion de matériau de la couche 106, chacune des régions 130, 132 de la structure de diffraction holographique 108 est réalisée dans une portion distincte de la couche 106, permettant une réalisation modulaire du système optique 1000, c'est-à-dire une réalisation de différentes parties du système optique 1000 indépendamment les unes des autres, puis l'assemblage de ces différentes parties.

Dans l'exemple de réalisation décrit, le système optique 1000 comporte une première partie 178 comprenant notamment le premier dispositif de guidage optique 102 et la première région 130 de la structure de diffraction holographique 108, et une deuxième partie 180 comprenant notamment le deuxième dispositif de guidage optique 104 et la deuxième région 132 de la structure de diffraction holographique 108.

La première partie 178 du système optique 1000 est par exemple réalisée en reportant le premier dispositif de guidage optique 102 sur un substrat transparent 182. Une couche de matériau 106.1, similaire à la couche 106 précédemment décrite, est ensuite déposée sur le substrat transparent 182 et le premier dispositif de guidage optique 102. Une couche de protection 126.1, similaire à la couche 126 précédemment décrite, est déposée sur la couche 106.1.

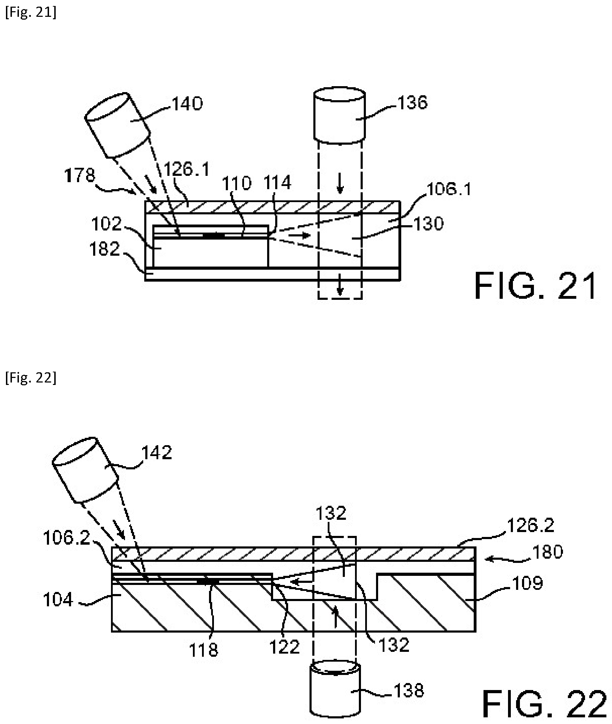

La première partie 178 du système optique 1000 est représentée seule sur la figure 21, pendant la réalisation de la première région 130 de la structure de diffraction holographique 108. La première région 130 selon ce troisième mode de réalisation est réalisée de manière analogue à la première région 130 précédemment décrite pour le deuxième mode de réalisation.

Parallèlement à la réalisation de la première partie 178 du système optique 1000, la deuxième partie 180 du système optique 1000 est réalisée. Comme dans l'exemple de réalisation précédemment décrit en lien avec le deuxième mode de réalisation, le deuxième dispositif de guidage optique 104 comporte par exemple au moins un guide optique 118 intégré à un substrat 109. Une gravure du substrat 109 est mise en œuvre pour former une cavité. Une couche de matériau 106.2, similaire à la couche 106 précédemment décrite, est ensuite déposée sur le substrat 109, et en particulier dans la cavité gravée dans le substrat 109. Une couche de protection 126.2, similaire à la couche 126 précédemment décrite, est déposée sur la couche 106.2.

La deuxième partie 180 du système optique 1000 est représentée seule sur la figure 22, pendant la réalisation de la deuxième région 132 de la structure de diffraction holographique 108. La deuxième région 132 selon ce troisième mode de réalisation est réalisée de manière analogue à la deuxième région 132 précédemment décrite pour le deuxième mode de réalisation. Le substrat 109 est donc, comme dans le deuxième mode de réalisation, au moins partiellement transparent ou comporte des trous borgnes 176 comme dans l'exemple précédemment décrit en lien avec la figure 19.

Au terme de ces étapes, les deux parties 178, 180 du système optique 1000 sont obtenues sous la forme de deux modules pouvant être reliés par un faisceau lumineux de référence identique. Ces deux modules sont assemblés via une étape d'alignement peu contrainte entre ces modules, et une solidarisation des deux modules l'une au-dessus de l'autre, par exemple par une couche de collage 184. Par exemple, si la taille du faisceau de référence est de 100 µm au niveau des première et deuxième régions 130, 132, les modules peuvent être positionnés à quelques micromètres près par rapport à des positions prédéterminées respectives, lors de l'étape d'alignement.

Un avantage que présente ce troisième mode de réalisation est que les deux parties 178, 180 du système optique 1000 peuvent être réalisées séparément, ce qui peut simplifier la réalisation de la structure de diffraction holographique 108, notamment la gestion des couplages des signaux lumineux utilisés pour la réalisation de la structure 108, par exemple lorsque le premier dispositif 102 est positionné au-dessus du guide optique 118. Cela permet également d'éviter une double insolation du matériau holographique lorsque la structure de diffraction holographique 108 comporte deux régions distinctes formées dans la même couche 106 comme précédemment décrit dans le deuxième mode de réalisation.

Plusieurs systèmes optiques 1000 selon ce troisième mode de réalisation sont avantageusement réalisés collectivement en utilisant un premier substrat pour la réalisation des premières parties 178 et un deuxième substrat pour la réalisation des deuxièmes parties 180 de ces différents systèmes optiques 100. Lors de la réalisation des structures de diffraction holographique 108 des systèmes optiques 1000, chacun des premier et deuxième substrats 109, 182 est déplacé afin de positionner, pour la réalisation de la région de la structure de diffraction holographique 108 correspondante de chacun des systèmes optiques 1000, le matériau de la couche 106.1 ou 106.2 en regard des éléments d'émission lumineuse utilisés pour la réalisation des régions 130, 132 de la structure de diffraction holographique 108. Un ensemble de structures de diffraction holographiques 108 peuvent ainsi être réalisées, avec une bonne répétabilité de position de ces structures qui est garantie par le maintien en position des faisceaux lumineux d'écriture utilisés.

Au terme de ces étapes, les premier et deuxième substrats sont réunis par exemple grâce à l'usage de croix d'alignement ou d'un repère mécanique en bord de plaque, présentes sur les deux substrats 109, 182. L'assemblage final obtenu est ensuite découpé en puces pour obtenir les systèmes optiques 1000.

Dans les différents exemples précédemment décrit, la structure de diffraction holographique 108 est avantageusement réalisée dans du photopolymère qui est transformé par des faisceaux lumineux, ce qui permet la réalisation de la structure 108 par auto-enregistrement dans le photopolymère. En variante, il est toutefois possible de réaliser la structure de diffraction holographique 108 d'une autre manière, en utilisant par exemple un autre type de matériau tel que de l'halogénure d'argent ou du DCG (« DiChromated Gelatin » en anglais, ou gélatine bichromatée). Dans ce cas, l'enregistrement de la structure de diffraction se fera en utilisant des bains de développement successifs de ce matériau.

Dans tous les modes de réalisation, la ou les couches de matériau étanche à l'oxygène recouvrant la ou les portions de matériau incluant la structure de diffraction holographique peuvent être retirées après la réalisation de la structure de diffraction holographique. Enfin, il apparaîtra à l'homme du métier que les guides d'onde d'écriture et les guides d'onde d'opération de chaque dispositif de guidage n'ont pas nécessairement des axes optiques parallèles.

## Revendications

1. Dispositif de couplage optique (100) configuré pour coupler optiquement un premier dispositif de guidage optique (102) à un deuxième dispositif de guidage optique (104), comprenant :
• au moins une première entrée-sortie optique par laquelle le premier dispositif de guidage optique (102) est destiné à émettre et/ou recevoir un premier faisceau lumineux (103) selon une première direction ,
• une deuxième entrée-sortie optique par laquelle le deuxième dispositif de guidage optique (104) est destiné à recevoir et/ou émettre le premier faisceau lumineux (103) selon une deuxième direction qui n'est pas parallèle à la première direction, et
• au moins une structure de diffraction holographique (108) représentative d'interférences destinées à se produire entre le premier faisceau lumineux (103), lorsque celui-ci est destiné à être émis dans la première entrée-sortie optique du dispositif de couplage optique (100) selon la première direction, et un deuxième faisceau lumineux (128) destiné à être focalisé sur la deuxième entrée-sortie optique du dispositif de couplage optique (100) parallèlement à la deuxième direction et qui croise le premier faisceau lumineux (103) dans une région de la structure de diffraction holographique (108).

2. Dispositif de couplage optique (100) selon la revendication 1, dans lequel la structure de diffraction holographique (108) est formée dans une seule portion de matériau (106).

3. Dispositif de couplage optique (100) selon la revendication 2, dans lequel la portion de matériau (106) incluant la structure de diffraction holographique (108) comporte au moins un photopolymère ou de l'halogénure d'argent.

4. Système optique (1000) comprenant au moins :
• un dispositif de couplage optique (100) selon l'une des revendications précédentes ;
• un premier dispositif de guidage optique (102) destiné à émettre et/ou recevoir un premier faisceau lumineux (103) et couplé optiquement à la première entrée-sortie optique du dispositif de couplage optique (100) ;
• un deuxième dispositif de guidage optique (104) destiné à recevoir et/ou émettre le premier faisceau lumineux (103) et couplé optiquement à la deuxième entrée-sortie optique du dispositif de couplage optique (100).

5. Système optique (1000) selon la revendication 4, dans lequel :
• le premier dispositif de guidage optique (102) comprend deux premières entrées-sorties de guidage (114, 116) distinctes et couplées optiquement à la première entrée-sortie optique du dispositif de couplage optique (100) ;
• le deuxième dispositif de guidage optique (104) comprend deux deuxièmes entrées-sorties de guidage (122, 124) distinctes et couplées optiquement à la deuxième entrée-sortie optique du dispositif de couplage optique (100).

6. Système optique (1000) selon l'une des revendications 4 et 5, dans lequel :
• les premier et deuxième dispositifs de guidage optique (102, 104) correspondent à deux circuits photoniques, ou à un circuit photonique et au moins une fibre optique ;
• le dispositif de couplage optique (100) et les premier et deuxième dispositifs de guidage optique (102, 104) sont disposés sur un même substrat (109).

7. Système optique (1000) selon l'une des revendications 4 à 6, dans lequel au moins l'un des premier et deuxième dispositifs de guidage optique (102) comporte un élément d'émission lumineuse.

8. Procédé de réalisation d'un système optique (1000), comprenant au moins :
• réalisation sur un substrat (109) d'un premier dispositif de guidage optique (102) destiné à émettre et/ou recevoir un premier faisceau lumineux (103) selon une première direction, et d'un deuxième dispositif de guidage optique (104) destiné à recevoir et/ou émettre le premier faisceau lumineux (103) selon une deuxième direction qui n'est pas parallèle à la première direction ;
• réalisation d'un dispositif de couplage optique (100) comprenant les étapes suivantes :
∘ dépôt d'une couche de matériau holographique (106) sur au moins une région du substrat (109) dans laquelle la première direction croise la deuxième direction ;
∘ émission d'un premier faisceau lumineux d'écriture (131) par le premier dispositif de guidage optique (102) selon la première direction, et d'un deuxième faisceau lumineux d'écriture (133) parallèle à la deuxième direction, focalisé sur le deuxième dispositif de guidage optique (104) et croisant le premier faisceau lumineux d'écriture (131) dans une partie de la couche de matériau holographique (106) déposée sur la région du substrat (109) pour former une structure de diffraction holographique (108) qui est représentative des interférences produites entre les premier et deuxième faisceaux lumineux d'écriture (131, 133), les premier et deuxième faisceaux lumineux d'écriture (131, 133) étant issus d'une même source optique cohérente.

9. Procédé selon la revendication 8, comportant en outre, entre la réalisation des premier et deuxième dispositifs de guidage optique (102, 104) et la réalisation de la structure de diffraction holographique (108), une étape d'alignement et de réglage des faisceaux lumineux d'écriture mise en œuvre en utilisant des faisceaux lumineux de réglage conservant les propriétés physiques de la couche de matériau holographique (106) utilisées pour la réalisation de la structure de diffraction holographique (108).
